# EUROPÄISCHE PATENTSCHRIFT

(11) **EP 2 872 440 B1**
(45) Veröffentlichungstag und Bekanntmachung des Hinweises auf die Patenterteilung: **22.08.2018**
(21) Anmeldenummer: 13733960.2
(22) Anmeldetag: 04.07.2013
(51) Int. Cl.: C01B 3/02, C01B 3/56, C10J 3/00, C10K 3/04, C10K 1/00, C10J 3/02, C10J 3/20

(54) **VERFAHREN ZUR REINIGUNG VON SYNTHESEGAS, INSBESONDERE FÜR DIE AMMONIAKSYNTHESE**
METHOD FOR PURIFYING SYNTHESIS GAS, IN PARTICULAR FOR AMMONIA SYNTHESIS
PROCÉDÉ POUR L'ÉPURATION DU GAZ DE SYNTHÈSE, EN PARTICULIER POUR LA SYNTHÈSE DE L'AMMONIAC

(30) Priorität: 12.07.2012 DE 102012013816
(43) Veröffentlichungstag der Anmeldung: 20.05.2015
(73) Patentinhaber: Linde Aktiengesellschaft, 80331 München (DE)
(72) Erfinder: KLEIN, Bernd, 80997 München (DE); HEINZEL, Albrecht, 81479 München (DE)
(74) Vertreter: Fischer, Werner
(86) Internationale Anmeldenummer: PCT/EP2013/001974
(87) Internationale Veröffentlichungsnummer: WO 2014/008996

(56) Entgegenhaltungen:
- DE-A1-102004 062 687
- US-A- 4 414 191
- US-A1- 2009 288 557
- Max Appl: "Ammonia, 3. Production Plants" In: "Ullmann's Encyclopedia of Industrial Chemistry", 15. Oktober 2011 (2011-10-15), Wiley-VCH Verlag GmbH & Co. KGaA, Weinheim, Germany, XP55056405, ISBN: 978-3-52-730673-2 DOI: 10.1002/14356007.o02_o12, Seite 244 - Seite 245

## Beschreibung

Die Erfindung betrifft ein Verfahren zur Reinigung von Synthesegasen, insbesondere für die Ammoniaksynthese, gemäß dem Oberbegriff des Anspruchs 1 Bei einem solchen Verfahren wird ein wasserstoffreicher Teilstrom, der von einem H₂-reichen, CO-haltigen Synthesegasstrom abgespalten insbesondere in einer Verbrennungsturbine zur Erzeugung von elektrischer Energie verbrannt, wobei weiterhin in einem Temperaturwechseladsorptionsschritt im verbleibenden Teil des H₂-reichen, CO-haltigen Synthesegasstromes enthaltene (ausfrierbare) Komponenten, wie z.B. Kohlendioxid, Methanol und/oder Wasser, bei niedrigen Temperaturen von (zumindest) einem Adsorber (z.B. bestehend aus Aluminiumsilikaten) adsorbiert werden und anschließend die adsorbierten Komponenten vom mindestens einen Adsorber durch Spülen mit Stickstoff bei höheren Temperaturen desorbiert werden.

Die Temperaturwechseladsorption dient dabei zur Erzielung einer höheren Reinheit des besagten Synthesegasstromes, wobei die besagte Adsorption und Regeneration periodisch aufeinander folgen, d.h., der Adsorber immer abwechselnd (kalt) beladen und danach (heiß) regeneriert wird. Vorzugsweise werden zumindest zwei Adsorber verwendet, wobei der eine adsorbiert während der andere regeneriert wird. Üblicherweise werden die Adsorber dabei mit heißem Stickstoff (insbesondere bei einer Temperatur zwischen 100°C bis 200°C) regeneriert, der einen vergleichsweise niedrigen Druck aufweist, der über dem Druck des Brenngases (H₂-reicher Teilstrom) liegt. Die Desorption/Regenerierung wird dann durch die Temperaturerhöhung ausgelöst (TWA-TemperaturWechselAdsorption). Der Druck spielt für die Regenerierung eine untergeordnete Rolle. Der erforderliche Stickstoffdruck resultiert letztlich aus der Anlagenintegration, die es erfordert, den Stickstoff nach der Regenerierung noch in den besagten Brenngasstrom zur Verbrennungsturbine einzuleiten). Der beladene Stickstoff enthält dann die besagten Komponenten, wie z.B. Kohlendioxid, Methanol und/oder Wasser. Hiernach wird der zur Regeneration verwendete Stickstoff in der Regel in der kalten Regeneration einer Rectisol-Wäsche (Sauergaswäsche mit Methanol) als Strippmedium verwendet. Eine weitere Verwendung des Stickstoffs ist nicht vorgesehen, d.h., der Stickstoff endet in der Regel im abgetrennten CO₂-Produkt.

Stromab der Temperaturwechseladsorption ist herkömmlicherweise bei der Reinigung von Synthesegas für die Ammoniaksynthese eine Flüssigstickstoffwäsche (Cold Box) vorgesehen, mittels der Kohlenmonoxid aus dem H₂-reichen, CO-haltigen Synthesegasstrom entfernt wird, wobei hierbei ggf. auch durch Zumischen von Stickstoff das für die Ammoniaksynthese notwendige H₂/N₂-Verhältnis im Synthesegasstrom von 3:1 eingestellt werden kann.

Problematisch an dem oben beschriebenen Verfahren ist insbesondere, dass dieses z.B. nicht verwendet werden kann, wenn das CO₂ mit einem niedrigen Stickstoffgehalt erhalten werden soll, z.B. für Anwendungen in der "*enhanced oil recovery*"-Technologie, und somit der beladene Stickstoff verbrannt oder anderweitig weiterbehandelt werden muss.

Hiervon ausgehend liegt daher der vorliegenden Erfindung die Aufgabe zugrunde, ein apparativ einfaches und ökonomisch tragfähiges Verfahren der eingangs genannten Art bereitzustellen, das hinsichtlich der Verwertung von Stickstoff verbessert ist.

Dieses Problem wird durch einen Verfahren mit den Merkmalen des Anspruchs 1 gelöst.

Danach ist vorgesehen, dass der besagte H₂-reiche Teilstrom vor dem Verbrennen mit dem bei der Temperaturwechseladsorption zur Regeneration verwendeten Stickstoff verdünnt wird.

Der verwendete Stickstoff weist dabei einen vergleichsweise hohen Druck auf im Bereich von 20bar bis 40bar, wobei dadurch insbesondere die Regenerierung der Temperaturwechseladsorption bei einem erhöhten Druck durchgeführt wird. Des Weiteren wird hinsichtlich der Temperaturwechseladsorption die Adsorption der besagten Komponenten vorzugsweise bei einer Temperatur im Bereich von -70 °bis üblicherweise 45°C (solche vergleichsweise hohen Temperaturen können z.B. bei einer chemischen Gaswäsche (aMDEA) auftreten) durchgeführt. Die Desorption erfolgt hingegen vorzugsweise bei Temperaturen im Bereich von 150 °C bis 250 °C, bevorzugt bei 200 °C. Die dafür nötige Wärme kann d abei durch den verwendeten Stickstoff bereitgestellt werden.

Im Ergebnis kann somit durch die erfindungsgemäße Lösung auf die Bereitstellung eines zusätzlichen Niedrigdruckstickstoffstromes zur Regeneration des Adsorbers in der Temperaturwechseladsorption verzichtet werden.

Gemäß einer Ausführungsform der Erfindung wird der im Temperaturwechseladsorptionsschritt eingesetzte Stickstoff durch eine kryogene Zerlegung von Luft in Stickstoff und Sauerstoff bereitgestellt. Hierbei kann z.B. atmosphärische Luft auf einen Druck von 5 bar bis 10 bar verdichtet und verflüssigt werden. Die verflüssigte Luft wird in einer oder mehreren Säulen bzw. Kolonnen in Sauerstoff und Stickstoff getrennt.

Zur Herstellung des Synthesegasstromes wird bevorzugt zunächst durch Vergasen von Kohlenstoff mittels partieller Oxidation mit Sauerstoff ein Kohlemonoxid und Wasserstoff (sowie weitere Komponenten) enthaltener Rohgasstrom erzeugt. Hierbei benötigter Sauerstoff wird vorzugsweise bei der vorstehend beschriebenen Luftzerlegung zusammen mit dem zum Spülen und Verdünnen benötigten Stickstoff produziert.

Gemäß einem weiteren Aspekt der Erfindung wird weiterhin im Rohgasstrom enthaltenes Kohlenmonoxid nach der Vergasung durch eine Wassergas-Shift-Reaktion mit H₂O zu Wasserstoff und Kohlendioxid umgesetzt (in Gegenwart von geeigneten Katalysatoren).

Gemäß einem weiteren Aspekt der Erfindung wird nach der Wassergas-Shift-Reaktion und vor der besagten Temperaturwechseladsorption im Rohgasstrom enthaltenes Sauergas, insbesondere CO₂, H₂S und/oder COS, durch eine Sauergaswäsche entfernt, wobei insbesondere das Sauergas von einem Waschmittel absorbiert wird. Das mit Sauergasen beladene Waschmittel kann anschließend regeneriert werden und erneut zur Sauergaswasche eingesetzt werden. Als Waschmittel wird bevorzugt Methanol eingesetzt, wobei die Sauergaswäsche bevorzugt durch eine sogenannte Rectisol-Wäsche dargestellt wird, bei der CO₂ und die schwefelhaltigen Komponenten in getrennten Fraktionen entfernt werden.

Anschließend wird der so erhaltene, von Sauergasen gereinigte Synthesegasstrom wie vorstehend beschrieben mittels einer Temperaturwechseladsorption von weiteren Verunreinigungen gereinigt (siehe oben) und ein (wasserstoffreicher) Teilstrom des solchermaßen hergestellten H₂-reichen, (noch) CO-haltigen Synthesegasstromes in einer Verbrennungseinheit, insbesondere in Form einer Verbrennungsturbine, verbrannt, wobei Wärmeenergie in mechanische Energie umgewandelt wird, die insbesondere in elektrische Energie umgesetzt wird.

Gemäß einem weiteren Aspekt der Erfindung wird der verbleibende H₂-reiche, CO-haltige Synthesegasstrom nach der Temperaturwechseladsorption zur weiteren Reinigung, insbesondere zur Entfernung von Kohlenmonoxid, sowie insbesondere zur Entfernung von Methan und vorhandenen Edelgasen, einer Flüssigstickstoffwäsche zugeführt. Die Flüssigstickstoffwäsche wird vorzugsweise bei einer Temperatur im Bereich von -185°C bis -193°C und einem Druck im Bereich von 30bar bis 80bar durchgeführt, und zwar vorzugsweise in einer Kolonne, die in einer Cold Box angeordnet ist, wobei der zu reinigende Synthesegasstrom im Gegenstrom mit einem Flüssigstickstoffstrom beaufschlagt wird. Die Wasserstoffkonzentration des fertigen Synthesegasproduktes liegt vorzugsweise bei ca. 78 Vol.-% und der Rest-CO-Gehalt ist insbesondere kleiner als 1ppmv.

Nach dem Verlassen der Cold Box kann dem H₂-reichen, CO-abgereicherten Synthesegasstrom N₂ zugesetzt werden, um z.B. das für die Ammoniaksynthese notwendige H₂/N₂-Verhältnis von 3:1 einzustellen. Gemäß einem weiteren Aspekt der Erfindung kann der solchermaßen hergestellte Synthesegasstrom in einer Ammoniaksynthese zu Ammoniak umgesetzt werden. Eine Anlage zur Durchführung des Verfahrens weist eine Sauergaswascheinheit auf, die dazu ausgebildet ist, ein Sauergas, insbesondere in Form von CO₂, H₂S und/oder COS, aus einem Wasserstoff und Kohlenmonoxid aufweisenden Rohgasstrom zu waschen, wobei bei der Sauergaswäsche bevorzugt ein organisches Lösungsmittel (typischerweise Methanol) bei tiefen Temperaturen verwendet wird, und wobei bevorzugt CO₂ und Schwefelkomponenten in getrennten Fraktionen entfernt werden, und zwar unter Entstehung eines CO₂-Produkts und einer H₂S/COS-reichen Fraktion (z.B. sogenannte Rectisol-Wäsche). Des Weiteren weist die Anlage eine stromab der Sauergaswascheinheit angeordnete Temperaturwechseladsorptionseinheit auf, die dazu ausgebildet ist, zur Erzeugung eines H₂-reichen, CO-haltigen Synthesegasstromes zumindest eine Komponente, insbesondere Kohlendioxid und Methanol bzw. Kohlendioxid und Wasser, aus dem besagten Rohgasstrom durch Adsorption an einem Adsorber der Temperaturwechseladsorptionseinheit bei niedrigen Temperaturen abzutrennen und den Adsorber durch Spülen mit Stickstoff bei vergleichsweise höheren Temperaturen zu regenerieren, wobei die Temperaturwechseladsorptionseinheit vorzugsweise zumindest zwei (parallel verwendete) Adsorber aufweist, die abwechselnd Adsorptions- und Regenerierungsphasen durchlaufen, so dass im Wesentlichen kontinuierlich ein entsprechend gereinigter H₂-reicher, CO-haltiger Synthesegasstrom bereitgestellt werden kann. Weiterhin weist die erfindungsgemäße Anlage eine in die Temperaturwechseladsorptionseinheit führende Stickstoffzuleitung zum Beschicken der Temperaturwechseladsorptionseinheit mit dem zum Spülen der Adsorber benötigten Stickstoff auf, eine Stickstoffableitung, die zum Abziehen von zum Spülen verwendeten Stickstoff aus der Temperaturwechseladsorptionseinheit ausgebildet ist, sowie eine Verbrennungseinheit, insbesondere in Form einer Verbrennungsturbine (Gasturbine), die dazu ausgebildet ist, einen H₂-reichen Teilstrom des H₂-reichen, CO-haltigen Synthesegasstromes zur Energieerzeugung zu verbrennen, und eine die Sauergaswascheinheit mit der Verbrennungseinheit verbindende Wasserstoffzuleitung, die dazu ausgebildet ist, jenen H₂-reichen Teilstrom aus der Sauergaswascheinheit in die Verbrennungseinheit zu leiten, wobei erfindungsgemäß die Stickstoffableitung zum Verdünnen des H₂-reichen Teilstromes mit Stickstoff vor dem Verbrennen des H₂-reichen Teilstromes, d.h., stromauf der Verbrennungseinheit bzw. -turbine, in die Wasserstoffzuleitung einmündet bzw. mit dieser verbunden ist.

In einer Variante der Anlage ist eine Luftzerlegungseinheit vorgesehen, die dazu ausgebildet ist, Luft kryogen in Stickstoff und Sauerstoff zu zerlegen, wobei die Luftzerlegungseinheit über die Stickstoffzuleitung mit der Temperaturwechseladsorptionseinheit verbunden ist, so dass Stickstoff zum Spülen des Adsorbers bzw. der Adsorber von der Luftzerlegungseinheit in die Temperaturwechseladsorptionseinheit strömen kann.

Bevorzugt ist dabei eine weitere Stickstoffzuleitung vorgesehen, die in die Wasserstoffzuleitung mündet bzw. mit dieser verbunden ist, so dass zusätzlich Stickstoff aus der Luftzerlegungseinheit an der Temperaturwechseladsorptionseinheit vorbei direkt in die Wasserstoffzuleitung (stromauf der Verbrennungseinheit) einspeisbar ist, um den H₂-reichen Teilstrom vor dem Verbrennen des H₂-reichen Teilstromes direkt mit Stickstoff zu verdünnen.

Zum Erzeugen des besagten Rohgasstromes ist gemäß einer Variante der Anlage ein Vergasungsreaktor vorgesehen, der dazu ausgebildet ist, Kohlenstoff mittels partieller Oxidation mit Sauerstoff zu vergasen, wobei insbesondere eine Sauerstoffzuleitung vorgesehen ist, die dazu ausgebildet ist, den in der Luftzerlegungseinheit erzeugten Sauerstoff in den Vergasungsreaktor zu leiten, um den Bedarf an Sauerstoff für die partielle Oxidation zu decken. Stromab des Vergasungsreaktors und stromauf der Sauergaswascheinheit ist weiterhin bevorzugt ein Wassergas-Shift-Reaktor vorgesehen, in dem im Rohgasstrom enthaltenes Kohlenmonoxid durch eine Wassergas-Shift-Reaktion mit H₂O zu Wasserstoff und Kohlendioxid umgesetzt wird.

Gemäß einer weiteren Variante der Anlage ist stromab der Temperaturwechseladsorptionseinheit eine Flüssigstickstoffwascheinheit vorgesehen, die dazu ausgebildet ist, Kohlenmonoxid aus dem H₂-reichen, CO-haltigen Synthesegasstrom mit Flüssigstickstoff zur Herstellung eines H₂-reichen und entsprechend CO-abgereicherten Synthesegasstromes auszuwaschen. Die Entfernung von Kohlenmonoxid aus dem Synthesegas ist insbesondere für die Ammoniaksynthese erforderlich, da Kohlenmonoxid die Aktivität der üblicherweise in der Ammoniaksynthese verwendeten Katalysatoren mindert. Bevorzugt weist die Flüssigstickstoffwascheinheit eine Kolonne in einer Cold Box auf, in die der zu reinigende Synthesegasstrom in einem unteren Abschnitt der Kolonne eingespeist wird, wobei der Flüssigstickstoff in den Kopf der Kolonne eingegeben wird. Das Kohlenmonoxid sowie weitere Verunreinigungen (Edelgase, Methan) können dann als stickstoffhaltiges Sumpfprodukt abgezogen werden, wohingegen der entsprechend CO-abgereicherte Synthesegasstrom am Kopf der Kolonne abgezogen wird.

Weitere Einzelheiten und Vorteile der Erfindung sollen durch die nachfolgenden Figurenbeschreibung eines Ausführungsbeispiels anhand der Figur erläutert werden.

Es zeigt:

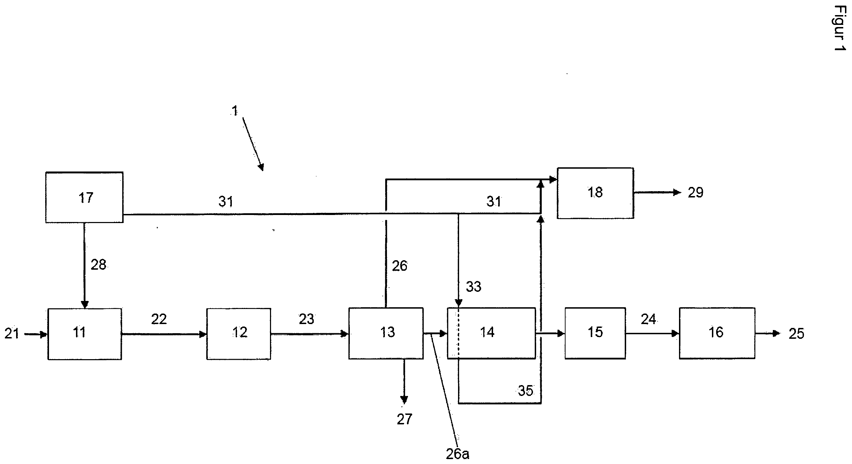

- Fig. 1: eine schematische Darstellung einer Anlage bzw. eines Verfahrens zur Reinigung eines Synthesegases, insbesondere für die Ammoniaksynthese.

Figur 1 zeigt eine schematische Darstellung eines Verfahrens bzw. einer Anlage 1 zur Reinigung eines Synthesegases, insbesondere für die Ammoniaksynthese.

Dabei wird in einem Vergasungsreaktor 11 Kohle 21 mittels partieller Oxidation mit Sauerstoff 28 vergast, so dass ein Rohgasstrom 22 entsteht, der u.a. Wasserstoff und Kohlenmonoxid enthält. Der benötigte Sauerstoff 28 wird hierbei durch eine Luftzerlegungseinheit 17 bereitgestellt, in der Luft kryogen in Stickstoff (Hochdruck) 31 und besagten Sauerstoff 28 zerlegt wird.

Im Rohgasstrom 22 enthaltenes Kohlenmonoxid wird in einer anschließenden Wassergas-Shift-Reaktion in einem entsprechenden Wassergas-Shift-Reaktor 12 mit Wasser zu Wasserstoff und Kohlendioxid umgesetzt. Hiernach wird Sauergas wie z.B. Kohlendioxid 27, Schwefelwasserstoff und Carbonylsulfid in einer Sauergaswascheinheit 13 entfernt, wobei der Rohgasstrom 23 mit Methanol im Gegenstrom in Kontakt gebracht wird und das Sauergas vom Methanol absorbiert wird. Dabei erfolgt die Entfernung von CO₂ und den Schwefelkomponenten in getrennten Fraktionen (Rectisol-Wäsche). Hierbei entsteht ein H₂-reicher, (noch) CO-haltiger Synthesegasstrom 26a, wobei ein Teil hiervon (H₂-reicher Teilstrom 26) in eine Verbrennungseinheit (Verbrennungsturbine) 18 geleitet wird und dort zur Energieerzeugung verbrannt wird.

Der verbleibende Teil des H₂-reichen, CO-haltiger Synthesegasstroms 26a wird in einer Temperaturwechseladsorptionseinheit 14 durch Temperaturwechseladsorption von noch enthaltenen (gefrierbaren) Gaskomponenten wie Kohlendioxid, Methanol und/oder Wasser befreit. Dabei durchströmt der Synthesegasstrom 26a einen insbesondere aluminiumsilikathaltigen Adsorber bei einer Temperatur von z.B. -50 °C und hohem Druck, wobei besagte Komponenten am Adsorber adsorbiert werden. Ist der Adsorber vollständig beladen, wird der zu reinigende Synthesegasstrom auf einen regenerierten weiteren Adsorber umgelegt und der beladene Adsorber wird bei vergleichsweise höheren Temperaturen regeneriert.

Zum Regenerieren werden die Adsorber vorzugsweise mit heißem Stickstoff 33, dessen Druck oberhalb des Brenngases (Strom 26) liegt, aus der Luftzerlegungseinheit 17 gespült, wobei der dann mit Kohlendioxid, Methanol und/oder Wasser beladene Stickstoff 35 zur Verdünnung des H₂-reichen Teilstromes (Brenngas) 26 diesem vor dem Verbrennen in der Verbrennungseinheit 18 zugegeben wird. Des Weiteren kann Stickstoff 31 aus der Zerlegungseinheit 17 direkt zum Verdünnen des H₂-reichen, zur Verbrennung vorgesehenen Teilstromes 26 dienen (wird vorher nicht zum Regenerieren der Adsorber verwendet).

Der gereinigte Synthesegasstrom wird nach der Temperaturwechseladsorption 14 mit flüssigem Stickstoff in einer Flüssigstickstoffwascheinheit 15 gewaschen, um Kohlenmonoxid sowie ggf. Methan und Edelgase zu entfernen. Hierbei kann ggf. auch das H₂/N₂-Verhältnis durch Zugeben von Stickstoff auf den für die Ammoniaksynthese 16 benötigten Wert von 3:1 eingestellt werden. Anschließend kann der H₂-reiche, CO-abgereicherte und N₂-haltige Synthesegasstrom 24 in einem Ammoniaksyntheseschritt 16 zu Ammoniak 25 umgesetzt werden.

Im Ergebnis weist das erfindungsgemäße Verfahren die Vorteile auf, wonach ein Teil des Stickstoffs für die Verdünnung des wasserstoffreichen Brennstoffes 26 auch für die Temperaturwechseladsorption verwendet wird,
wodurch der für die Regenerierung der TWA benötigte Stickstoff in den Gesamtprozess integriert wird, ohne einen zusätzlichen Verbrauch darzustellen. Weiterhin ist für den zum Verdünnen verwendeten Stickstoff keine zusätzlich Druckstufe erforderlich. Schließlich muss der beladene und verunreinigte Stickstoff aus der Temperaturwechseladsorption aufgrund seiner erfindungsgemäßen Verwendung als Verdünnungsmittel nicht aufgearbeitet werden.

**Bezugszeichenliste**

| | |
|---|---|
| 1 | Anlage |
| 11 | Vergasungsreaktor |
| 12 | Wassergas-Shift-Reaktion (WGSR) |
| 13 | Sauergaswascheinheit |
| 14 | Temperaturwechseladsorptionseinheit (TWA) |
| 15 | Flüssigstickstoffwascheinheit |
| 16 | Ammoniaksynthese |
| 17 | Luftzerlegungseinheit |
| 18 | Verbrennungseinheit |
| 21 | Kohlenstoff |
| 22 | Rohgasstrom (CO, H2) |
| 23 | Rohgasstrom nach WGSR |
| 24 | Synthesegasstrom (H₂) |
| 25 | Ammoniak |
| 26 | H₂-reicher Teilstrom (Rohwasserstoff) |
| 27 | Kohlendioxid |
| 28 | Sauerstoff |
| 29 | Elektrische Energie |
| 31 | Stickstoff als Verdünnungsmittel |
| 33 | Stickstoff als Spülgas in TSA |
| 35 | Beladener Stickstoff als Verdünnungsmittel |

## Patentansprüche

1. Verfahren zum Reinigen von Synthesegas, insbesondere für die Ammoniaksynthese, wobei
- ein Teilstrom (26) eines H₂-reichen, CO-haltigen Synthesegasstromes verbrannt wird, insbesondere zur Erzeugung elektrischer Energie, und wobei
- zumindest eine im verbleibenden H₂-reichen, CO-haltigen Synthesegasstrom (26a) enthaltene Komponente, insbesondere in Form von Kohlendioxid, Methanol und/oder Wasser, bei niedrigen Temperaturen von einem Adsorber (14) adsorbiert wird und anschließend jene mindestens eine adsorbierte Komponente vom Adsorber (14) durch Spülen mit Stickstoff (33) bei höheren Temperaturen desorbiert wird,
**dadurch gekennzeichnet,**
**dass** das Spülen des Absorbers (14) bei einem Druck zwischen 20 bis 40bar durchgeführt und der H₂-reiche Teilstrom (26) vor dem Verbrennen mit zum Spülen verwendeten Stickstoff (35) verdünnt wird.

2. Verfahren nach Anspruch 1, **dadurch gekennzeichnet, dass** zusätzlich Stickstoff (31), der zuvor nicht zum Spülen des Adsorbers (14) verwendet worden ist, dem H₂-reichen Teilstrom (26) vor dem Verbrennen zugegeben wird, um diesen zu verdünnen, wobei insbesondere der zum Verdünnen verwendete Stickstoff (31, 33) durch kryogene Zerlegung (17) von Luft hergestellt wird.

3. Verfahren nach Anspruch 1 oder 2, **dadurch gekennzeichnet, dass** zur Herstellung des besagten H₂-reichen, CO-haltigen Synthesegasstromes (26a) durch Vergasung von Kohlenstoff (21) mittels partieller Oxidation mit Sauerstoff (28) ein Wasserstoff und Kohlenmonoxid enthaltender Rohgasstrom (22) erzeugt wird, wobei insbesondere jener Sauerstoff (28) durch die besagte Zerlegung von Luft (17) bereitgestellt wird, und wobei insbesondere im Rohgasstrom (22) enthaltenes Kohlenmonoxid durch eine Wassergas-Shift-Reaktion (12) mit H₂O zu Wasserstoff und Kohlendioxid umgesetzt wird.

4. Verfahren nach Anspruch 3, **dadurch gekennzeichnet, dass** vor dem besagten Adsorbieren (14) der mindestens einen, im H₂-reichen, CO-haltigen Synthesegasstrom (26a) enthaltenen Komponente in dem Rohgasstrom (23) enthaltenes Sauergas, insbesondere in Form von CO₂, H₂S und/oder COS, unter Entstehung des besagten H₂-reichen, CO-haltigen Synthesegasstromes (26a) mittels eines Waschmittels herausgewaschen wird (13), wobei als Waschmittel insbesondere Methanol verwendet wird.

5. Verfahren nach einem der vorhergehenden Ansprüche, **dadurch gekennzeichnet, dass** der H₂-reiche, CO-haltige Synthesegasstrom (26a) nach dem Adsorbieren (14) der mindestens einen Komponente zum Entfernen von Kohlenmonoxid einer Flüssigstickstoffwäsche (15) unterzogen wird, wobei ein H₂-reicher und entsprechend CO-abgereicherter Synthesegasstrom (24) entsteht.

6. Verfahren nach Anspruch 5, **dadurch gekennzeichnet, dass** der H₂-reiche, CO-abgereicherte Synthesegasstrom (24) zu Ammoniak (25) umgesetzt wird.

## Claims

1. Process for purifying synthesis gas, in particular for the synthesis of ammonia, where
- a substream (26) of an H₂-rich, CO-containing synthesis gas stream is burnt, in particular to generate electric energy, and
- at least one component present in the remaining H₂-rich, CO-containing synthesis gas stream (26a), in particular in the form of carbon dioxide, methanol and/or water, is adsorbed at low temperatures by an adsorbent (14) and this at least one adsorbed component is subsequently desorbed from the adsorbent (14) by flushing with nitrogen (33) at higher temperatures,
**characterized in that** the flushing of the adsorbent (14) is carried out at a pressure in the range from 20 to 40 bar and the H₂-rich substream (26) is diluted with nitrogen (35) used for flushing before being burnt.

2. Process according to Claim 1, **characterized in that** nitrogen (31) which has previously not been used for flushing the adsorbent (14) is additionally added to the H₂-rich substream (26) before burning in order to dilute this substream, where, in particular, the nitrogen (31, 33) used for dilution is produced from air by cryogenic fractionation (17).

3. Process according to Claim 1 or 2, **characterized in that** a raw gas stream (22) which contains hydrogen and carbon monoxide is produced by gasification of carbon (21) by means of partial oxidation by oxygen (28) in order to produce the said H₂-rich, CO-containing synthesis gas stream (26a), where, in particular, this oxygen (28) is provided by the fractionation of air (17) and, in particular, carbon monoxide present in the raw gas stream (22) is converted by means of a water gas shift reaction (12) with H₂O into hydrogen and carbon dioxide.

4. Process according to Claim 3, **characterized in that**, before the said adsorption (14) of the at least one component present in the H₂-rich, CO-containing synthesis gas stream (26a), acid gas, in particular in the form of CO₂, H₂S and/or COS, present in the raw gas stream (23) is scrubbed out by means of a scrubbing agent (13) to form the said H₂-rich, CO-containing synthesis gas stream (26a), with, in particular, methanol being used as scrubbing agent.

5. Process according to any of the preceding claims, **characterized in that** the H₂-rich, CO-containing synthesis gas stream (26a) after adsorption (14) of the at least one component is subjected to a liquid nitrogen scrub (15) to remove carbon monoxide, forming an H₂-rich and correspondingly CO-depleted synthesis gas stream (24).

6. Process according to Claim 5, **characterized in that** the H₂-rich, CO-depleted synthesis gas stream (24) is converted into ammonia (25).

## Revendications

1. Procédé de purification d'un gaz de synthèse, notamment pour la synthèse d'ammoniac, selon lequel
- un courant partiel (26) d'un courant de gaz de synthèse riche en H₂, contenant du CO, est brûlé, notamment pour la génération d'énergie électrique, et
- au moins un composant contenu dans le courant de gaz de synthèse restant riche en H₂, contenant du CO (26a), notamment sous la forme de dioxyde de carbone, de méthanol et/ou d'eau, est adsorbé à des températures basses par un adsorbeur (14), puis ledit au moins un composant adsorbé par l'adsorbeur (14) est désorbé par rinçage avec de l'azote (33) à des températures plus élevées,
**caractérisé en ce que**
le rinçage de l'absorbeur (14) est réalisé à une pression comprise entre 20 et 40 bar, et le courant partiel riche en H₂ (26) est dilué avec l'azote (35) utilisé pour le rinçage avant la combustion.

2. Procédé selon la revendication 1, **caractérisé en ce que** de l'azote (31) qui n'a pas auparavant été utilisé pour le rinçage de l'adsorbeur (14) est en outre ajouté au courant partiel riche en H₂ (26) avant la combustion afin de diluer celui-ci, l'azote (31, 33) utilisé pour la dilution étant notamment fabriqué par décomposition cryogénique (17) d'air.

3. Procédé selon la revendication 1 ou 2, **caractérisé en ce qu'**un courant gazeux brut (22) contenant de l'hydrogène et du monoxyde de carbone est formé pour la fabrication dudit courant de gaz de synthèse riche en H₂, contenant du CO (26a) par gazage de carbone (21) par oxydation partielle avec de l'oxygène (26), l'oxygène (28) étant notamment mis à disposition par ladite décomposition d'air (17) et le monoxyde de carbone contenu dans le courant gazeux brut (22) étant notamment transformé en hydrogène et dioxyde de carbone par une réaction de conversion de gaz à l'eau (12) avec H₂O.

4. Procédé selon la revendication 3, **caractérisé en ce qu'**avant ladite adsorption (14) dudit au moins un composant contenu dans le courant de gaz de synthèse riche en H₂, contenant du CO (26a), le gaz acide contenu dans le courant gazeux brut (23), notamment sous la forme de CO₂, H₂S et/ou COS, est éliminé par lavage (13) au moyen d'un agent de lavage avec formation dudit courant de gaz de synthèse riche en H₂, contenant CO (26a), du méthanol étant notamment utilisé en tant qu'agent de lavage.

5. Procédé selon l'une quelconque des revendications précédentes, **caractérisé en ce que** le courant de gaz de synthèse riche en H₂, contenant du CO (26a) est soumis après l'adsorption (14) dudit au moins un composant à un lavage à l'azote liquide (15) pour l'élimination du monoxyde de carbone, un courant de gaz de synthèse riche en H₂ et ainsi appauvri en CO (24) étant formé.

6. Procédé selon la revendication 5, **caractérisé en ce que** le courant de gaz de synthèse riche en H₂, appauvri en CO (24) est transformé en ammoniac (25).
